(19) Europäisches Patentamt
European Patent Office
Office européen des brevets

(11) **EP 3 828 977 A1**

(12) **DEMANDE DE BREVET EUROPEEN**

(43) Date de publication:
**02.06.2021 Bulletin 2021/22**

(51) Int Cl.:
*H01M 10/0525* $^{(2010.01)}$    *H01M 10/0567* $^{(2010.01)}$
*H01M 10/0568* $^{(2010.01)}$

(21) Numéro de dépôt: **21150753.8**

(22) Date de dépôt: **13.02.2018**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.02.2017 FR 1751183**

(62) Numéro(s) de document de la (des) demande(s)
initiale(s) en application de l'article 76 CBE:
**18707107.1 / 3 430 671**

(71) Demandeur: **ARKEMA FRANCE
92700 Colombes (FR)**

(72) Inventeurs:
• **SCHMIDT, Grégory
69493 PIERRE-BENITE Cedex (FR)**
• **TEISSIER, Rémy
69493 PIERRE-BENITE Cedex (FR)**
• **BONNET, Philippe
69493 PIERRE-BENITE Cedex (FR)**

(74) Mandataire: **Arkema Patent
Arkema France
DRD-DPI
420, rue d'Estienne d'Orves
92705 Colombes Cedex (FR)**

Remarques:
Cette demande a été déposée le 08-01-2021 comme
demande divisionnaire de la demande mentionnée
sous le code INID 62.

(54) **SOLUTION AQUEUSE DE SEL DE BIS(FLUOROSULFONYL)IMIDE DE LITHIUM**

(57) La présente invention concerne une solution aqueuse de sel de bis(fluorosulfonyl)imide de lithium, caractérisé en ce qu'elle possède un pH compris entre 4 et 8, en particulier à une température de 25°C,.

La présente invention concerne également une solution aqueuse de sel de bis(fluorosulfonyl)imide de lithium, comprenant une teneur en ions $H^+$ comprise entre 0,08 ppb et 0,80 ppm, entre 0,08 ppb et 0,63 ppm ou entre 0,25 ppb et 2,53 ppb.

EP 3 828 977 A1

**Description**

DOMAINE DE L'INVENTION

La présente invention concerne un sel de bis(fluorosulfonyl)imide de lithium ayant une teneur spécifique en protons H⁺.

La présente invention concerne également diverses utilisations dudit sel de bis(fluorosulfonyl)imide de lithium.

Le marché des batteries Li-ion nécessite de développer des batteries de plus forte puissance. Cela passe par l'augmentation du voltage nominal des batteries Li-ion. Pour atteindre les voltages visés, des électrolytes de grande pureté sont nécessaires.

Dans le domaine spécifique des batteries Li-ion, le sel actuellement le plus utilisé est le $LiPF_6$. Ce sel montre de nombreux désavantages tels qu'une stabilité thermique limitée, une sensibilité à l'hydrolyse et donc une plus faible sécurité de la batterie.

De nouveaux sels de lithium de type sulfonylimide ont été récemment développés pour tenter d'améliorer les performances des batteries secondaires. Nous pouvons citer le LiTFSI (bis(trifluoromethanesulfonyl)imidure de lithium) et le LiFSI (bis(fluorosulfonyl)imidure de lithium). Ces sels présentent peu ou pas de décomposition spontanée, et sont plus stables vis-à-vis de l'hydrolyse que $LiPF_6$. Néanmoins le LiTFSI présente le désavantage d'être corrosif vis-à-vis des collecteurs de courant en aluminium.

Toutefois, il existe un besoin pour de nouveaux sels présentant des performances électroniques améliorées et/ou une durée de vie plus longue dans les batteries Li-ion.

Il existe également un besoin pour de nouveaux sels pouvant être utilisés à des tensions de coupure de charge élevées.

DESCRIPTION DE L'INVENTION

La présente invention concerne un sel de bis(fluorosulfonyl)imide de lithium, caractérisé en ce que, après mise en solution dans l'eau pour former une solution aqueuse, ladite solution aqueuse possède un pH compris entre 4 et 8, en particulier à une température de 25°C.

Selon un mode de réalisation préféré, le sel LiFSI est tel qu'après mise en solution dans l'eau pour former une solution aqueuse, ladite solution aqueuse possède un pH par exemple compris entre 4,1 et 8, entre 4,2 et 8, entre 4,3 et 8, entre 4,4 et 8, entre 4,5 et 8, entre 4,6 et 8, entre 4,7 et 8, entre 4,8 et 8, entre 4,9 et 8, entre 5 et 8, entre 5,1 et 8, entre 5,2 et 8, entre 5,3 et 8, entre 5,4 et 8, entre 5,5 et 8, entre 5,6 et 8, entre 5,7 et 8, entre 5,8 et 8, entre 5,9 et 8, entre 6 et 8, entre 6,1 et 8, entre 6,2 et 8, entre 6,3 et 8, entre 6,4 et 8, entre 6,5 et 8, entre 6,6 et 8, entre 6,7 et 8, entre 6,8 et 8, entre 6,9 et 8, entre 7 et 8, entre 4 et 7,5, entre 4,1 et 7,5, entre 4,2 et 7,5, entre 4,3 et 7,5, entre 4,4 et 7,5, entre 4,5 et 7,5, entre 4,6 et 7,5, entre 4,7 et 7,5, entre 4,8 et 7,5, entre 4,9 et 7,5, entre 5 et 7,5, entre 5,1 et 7,5, entre 5,2 et 7,5, entre 5,3 et 7,5, entre 5,4 et 7,5, entre 5,5 et 7,5, entre 5,6 et 7,5, entre 5,7 et 7,5, entre 5,8 et 7,5, entre 5,9 et 7,5, entre 6 et 7,5, entre 6,1 et 7,5, entre 6,2 et 7,5, entre 6,3 et 7,5, entre 6,4 et 7,5, ou entre 6,5 et 7,5. De préférence, le sel LiFSI selon l'invention est tel qu'après mise en solution dans l'eau pour former une solution aqueuse, ladite solution aqueuse possède un pH compris entre 6 et 8, de préférence entre 6,5 et 8, et en particulier entre 6,5 et 7,5.

Dans le cadre de l'invention, on utilise de manière équivalente les termes « sel de lithium de bis(fluorosulfonyl)imide », « lithium bis(sulfonyl)imidure », « LiFSI », « $LiN(FSO_2)_2$ », « lithium de bis(sulfonyl)imide », ou « bis(fluorosulfonyl)imidure de lithium ».

Typiquement, le pH se définit comme le logarithme négatif de l'activité de l'ion hydrogène, selon la formule suivante :

$$pH = -log_{10} [H^+]$$

Le pH d'une solution peut être mesuré par toute méthode connue de l'homme du métier. On peut par exemple mesurer le pH à l'aide d'une électrode de verre, dont le potentiel peut varier en fonction de la concentration des ions hydrogène suivant l'équation de Nernst. Ce potentiel peut être mesuré par rapport à une électrode de référence à l'aide d'un potentiomètre à haute impédance, communément appelé pH-mètre. Comme pH-mètre, on peut par exemple utiliser le modèle pHM210 de la marque Radiometer.

Le pH de la solution de LiFSI peut être mesuré à l'aide d'un pH-mètre, en particulier préalablement étalonné à l'aide de trois solutions tampons (pH=4,0, 7,0 et 10,0). Le sel de LiFSI peut mis en solution dans l'eau (ladite eau ayant de préférence un pH de 7,45 ± 0,5), pour obtenir une concentration massique en LiFSI de 0,125 g/mL. La solution aqueuse peut être agitée pendant la mesure du pH.

Selon un mode de réalisation, la concentration en LiFSI dans la solution aqueuse selon l'invention est comprise entre 0,050 et 0,250 g/mL, de préférence entre 0,080 et 0,200 g/mL, préférentiellement entre 0,1 et 0,2, en particulier la concentration est de 0,125 g/mL.

Selon un mode de réalisation, le sel de bis(fluorosulfonyl)imide de lithium susmentionné comprend une teneur en ions $H^+$ comprise entre 0,08 ppb et 0,80 ppm, entre 0,08 ppb et 0,63 ppm, entre 0,08 ppb et 0,50 ppm, entre 0,08 ppb et 0,40 ppm, entre 0,08 ppb et 0,32 ppm, entre 0,08 ppb et 0,25 ppm, entre 0,08 ppb et 0,20 ppm, entre 0,08 ppb et 0,16 ppm, entre 0,08 ppb et 0,13 ppm, entre 0,08 ppb et 0,10 ppm, entre 0,08 ppb et 0,08 ppm, entre 0,08 ppb et 0,06 ppm, entre 0,08 ppb et 0,05 ppm, entre 0,08 ppb et 0,04 ppm, entre 0,08 ppb et 0,032 ppm, entre 0,08 ppb et 0,025 ppm, entre 0,08 ppb et 0,020 ppm, entre 0,08 ppb et 0,016 ppm, entre 0,08 ppb et 0,013 ppm, entre 0,08 ppb et 10 ppb, entre 0,08 ppb et 8 ppb, entre 0,08 ppb et 6,35 ppb, entre 0,08 ppb et 5,05 ppb, entre 0,08 ppb et 4 ppb, entre 0,08 ppb et 3,18 ppb, entre 0,08 ppb et 2,53 ppb, entre 0,08 ppb et 2,01 ppb, entre 0,08 ppb et 1,59 ppb, entre 0,08 ppb et 1,27 ppb, entre 0,08 ppb et 1,01 ppb, entre 0,25 ppb et 0,8 ppm, entre 0,25 ppb et 0,63 ppm, entre 0,25 ppb et 0,50 ppm, entre 0,25 ppb et 0,40 ppm, entre 0,25 ppb et 0,32 ppm, entre 0,25 ppb et 0,25 ppm, entre 0,25 ppb et 0,20 ppm, entre 0,25 ppb et 0,16 ppm, entre 0,25 ppb et 0,13 ppm, entre 0,25 ppb et 0,10 ppm, entre 0,25 ppb et 0,08 ppm, entre 0,25 ppb et 0,06 ppm, entre 0,25 ppb et 0,05 ppm, entre 0,25 ppb et 0,04 ppm, entre 0,25 ppb et 0,032 ppm, entre 0,25 ppb et 0,025 ppm, entre 0,25 ppb et 0,020 ppm, entre 0,25 ppb et 0,016 ppm, entre 0,25 ppb et 0,013 ppm, entre 0,25 ppb et 10 ppb, entre 0,25 ppb et 8 ppb, entre 0,25 ppb et 6,35 ppb, entre 0,25 ppb et 5,05 ppb, entre 0,25 ppb et 4 ppb, entre 0,25 ppb et 3,18 ppb, ou entre 0,25 ppb et 2,53 ppb.

Dans le cadre de l'invention, le terme de « ppm » correspond à « partie par million » et s'entend de ppm en poids.

Dans le cadre de l'invention, le terme de « ppb » correspond à « partie par milliard », et s'entend de ppb en poids.

Dans le cadre de l'invention, on entend par exemple par « sel ayant une teneur en ions $H^+$ égale à 8 ppm en poids », un sel ayant une teneur en ions $H^+$ égale à 8 ppm en poids par rapport au poids total dudit sel.

La présente invention concerne également un sel de bis(fluorosulfonyl)imide de lithium, comprenant une teneur en ions $H^+$ comprise entre 0,08 ppb et 0,80 ppm, 0,08 ppb et 0,63 ppm, entre 0,08 ppb et 0,50 ppm, entre 0,08 ppb et 0,40 ppm, entre 0,08 ppb et 0,32 ppm, entre 0,08 ppb et 0,25 ppm, entre 0,08 ppb et 0,20 ppm, entre 0,08 ppb et 0,16 ppm, entre 0,08 ppb et 0,13 ppm, entre 0,08 ppb et 0,10 ppm, entre 0,08 ppb et 0,08 ppm, entre 0,08 ppb et 0,06 ppm, entre 0,08 ppb et 0,05 ppm, entre 0,08 ppb et 0,04 ppm, entre 0,08 ppb et 0,032 ppm, entre 0,08 ppb et 0,025 ppm, entre 0,08 ppb et 0,020 ppm, entre 0,08 ppb et 0,016 ppm, entre 0,08 ppb et 0,013 ppm, entre 0,08 ppb et 10 ppb, entre 0,08 ppb et 8 ppb, entre 0,08 ppb et 6,35 ppb, entre 0,08 ppb et 5,05 ppb, entre 0,08 ppb et 4 ppb, entre 0,08 ppb et 3,18 ppb, entre 0,08 ppb et 2,53 ppb, entre 0,08 ppb et 2,01 ppb, entre 0,08 ppb et 1,59 ppb, entre 0,08 ppb et 1,27 ppb, entre 0,08 ppb et 1,01 ppb, entre 0,25 ppb et 0,8 ppm, entre 0,25 ppb et 0,63 ppm, entre 0,25 ppb et 0,50 ppm, entre 0,25 ppb et 0,40 ppm, entre 0,25 ppb et 0,32 ppm, entre 0,25 ppb et 0,25 ppm, entre 0,25 ppb et 0,20 ppm, entre 0,25 ppb et 0,16 ppm, entre 0,25 ppb et 0,13 ppm, entre 0,25 ppb et 0,10 ppm, entre 0,25 ppb et 0,08 ppm, entre 0,25 ppb et 0,06 ppm, entre 0,25 ppb et 0,05 ppm, entre 0,25 ppb et 0,04 ppm, entre 0,25 ppb et 0,032 ppm, entre 0,25 ppb et 0,025 ppm, entre 0,25 ppb et 0,020 ppm, entre 0,25 ppb et 0,016 ppm, entre 0,25 ppb et 0,013 ppm, entre 0,25 ppb et 10 ppb, entre 0,25 ppb et 8 ppb, entre 0,25 ppb et 6,35 ppb, entre 0,25 ppb et 5,05 ppb, entre 0,25 ppb et 4 ppb, entre 0,25 ppb et 3,18 ppb, ou entre 0,25 ppb et 2,53 ppb.

La détermination de la teneur en protons $H^+$ dans le sel de bis(fluorosulfonyl)imide de lithium est de préférence réalisée par pH-mètrie, en particulier selon la méthode mentionnée précédemment.

La demanderesse a découvert que l'utilisation du sel de LiFSI selon l'invention dans un électrolyte de batterie Li-ion, permet avantageusement d'avoir un courant résiduel faible à une tension de coupure de charge par exemple de 4,2V ou de 4,4V. Ce courant résiduel traduit les réactions parasites qui ont lieu dans une batterie Li-ion lors de son utilisation. Ces réactions parasites consomment des électrons et donc diminuent l'autonomie des batteries Li-ion au cours de leur utilisation. Par ailleurs, ces réactions parasites ont également un fort impact sur la sécurité des batteries car de telles réactions peuvent créer des réactions en chaîne pouvant provoquer l'emballement et l'explosion de la batterie Li-ion.

Ainsi, l'utilisation du sel de LiFSI selon l'invention dans un électrolyte de batterie Li-ion, permet avantageusement d'améliorer la durée de vie de batterie Li-ion et/ou les performances électroniques d'une batterie Li-ion, et/ou la sécurité de ladite batterie, en particulier à une tension de coupure de charge élevée telle que par exemple à 4,4V.

L'utilisation du sel de LiFSI selon l'invention dans une batterie Li-ion permet avantageusement d'atteindre une tension de coupure de charge élevée, notamment supérieure ou égale à 4,4V.

Dans le cadre de l'invention, et sauf mention contraire, on entend par « tension de coupure de charge » (cut-off voltage), la limite de tension haute d'une batterie considérée comme totalement chargée. La tension de coupure est habituellement choisie afin d'obtenir la capacité maximum de la batterie.

La présente invention concerne également l'utilisation du sel de bis(fluorosulfonyl)imide de lithium dans une batterie Li-ion.

La présente invention concerne également l'utilisation du sel de bis(fluorosulfonyl)imide de lithium dans une batterie Li-ion fonctionnant à une tension de coupure de charge supérieure ou égale à 4,2V, de préférence supérieure ou égale à 4,4V.

La présente invention concerne également l'utilisation du sel de bis(fluorosulfonyl)imide de lithium dans un électrolyte, notamment dans un électrolyte de batterie Li-ion.

La présente invention concerne également une composition d'électrolyte comprenant le sel de bis(fluorosulfonyl)imide de lithium tel que défini selon l'invention, et un solvant organique.

Des exemples de solvants organiques comprennent des éthers tels que l'éthylène glycol diméthyl éther (1,2-diméthoxyéthane), l'éthylène glycol diéthyl éther, le tétrahydrofurane, le 2-méthyltétrahydrofurane, le 2,6-diméthyltétrahydrofurane, le tétrahydropyrane, un éther couronne, le triéthylène glycol diméthyl éther, le tétraéthylène glycol diméthyl éther, le 1,4- dioxane et le 1,3-dioxolane ; les esters d'acide carbonique tels que le carbonate de diméthyle, le carbonate d'éthyle méthyle, le carbonate de diéthyle, le carbonate de diphényle et le carbonate de méthyle phényle ; les esters de carbonate cycliques tels que le carbonate d'éthylène, le carbonate de propylène, l'éthylène 2,3-diméthylcarbonate, le carbonate de butylène, le vinylène carbonate et l'éthylène 2-vinylcarbonate ; les esters d'acide carboxylique aliphatique tels que le formate de méthyle, l'acétate de méthyle, le propionate de méthyle, l'acétate d'éthyle, l'acétate de propyle, l'acétate de butyle et l'acétate d'amyle ; les esters d'acide carboxylique aromatique tels que le benzoate de méthyle et le benzoate d'éthyle; les esters d'acide carboxylique tels que la $\gamma$-butyrolactone, la $\gamma$-valérolactone et la 5-valérolactone ; les esters d'acide phosphorique tels que le triméthyl phosphate, l'éthyl diméthyl phosphate, le diéthyl méthyl phosphate et le triéthyl phosphate ; les nitriles tels que l'acétonitrile, le propionitrile, le méthoxypropionitrile, le glutaronitrile, l'adiponitrile, le 2-méthylglutaronitrile, le valéronitrile, le butyronitrile et l'isobutyronitrile ; les amides tels que le N-méthylformamide, le N-éthylformamide, le N,N-diméthylformamide, le N,N-diméthylacetamide, la N-méthylpyrrolidinone, la N-méthylpyrrolidone et la N-vinylpyrrolidone ; les composés soufrés tels que le diméthylsulfone, l'éthylméthylsulfone, le diéthylsulfone, le sulfolane, le 3-méthylsulfolane et le 2,4-diméthylsulfolane ; les alcools tels que l'éthylène glycol, le propylène glycol, l'éthylene glycol monométhyléther et l'éthylène glycol monoéthyl éther ; les sulfoxydes tels que le diméthyl sulfoxyde, le méthyl éthyl sulfoxyde et le diéthyl sulfoxyde ; les nitriles aromatiques tels que le benzonitrile et le tolunitrile ; le nitrométhane ; la 1,3-diméthyl-2-imidazolidinone ; la 1,3-diméthyl-3,4,5,6-tétrahydro-2(1,H)-pyrimidinone ; la 3-méthyl-2-oxazolidinone. Ces solvants peuvent être utilisés individuellement ou en combinaisons.

Les esters d'acide carbonique, les esters d'acide carboxylique aliphatique, les esters d'acide carboxylique et les éthers sont préférés, et les esters d'acide carbonique sont encore davantage préférés. En particulier, le solvant organique est le mélange carbonate d'éthylène/carbonate d'éthyle méthyle, en particulier dans un ratio volumique 3/7.

La concentration en sel LiFSI selon l'invention peut varier entre 0,1% et 15 %, de préférence entre 1% et 10% en poids par rapport au poids total de la composition d'électrolyte.

Selon un mode de réalisation, la composition d'électrolyte peut comprendre un ou plusieurs additifs. On peut par exemple citer le carbonate de fluoroéthylène, le carbonate de vinylène, les liquides ioniques, les anhydrides tels que par exemple l'anhydride succinique, et leurs mélanges.

La teneur en additifs dans la composition d'électrolyte selon l'invention peut varier entre 0,1 et 10 %, de préférence entre 1% et 5% en poids par rapport au poids total de la composition d'électrolyte.

La présente invention concerne également l'utilisation dudit sel de bis(fluorosulfonyl)imide de lithium ou de la composition d'électrolyte le contenant, dans des batteries Li-ion, en particulier dans des batteries Li-ion d'appareils nomades, par exemple les téléphones portables ou les ordinateurs portables, de véhicules électriques, de stockage d'énergie renouvelable par exemple le photovoltaïque ou l'éolien.

La présente demande concerne l'utilisation du sel de bis(fluorosulfonyl)imide de lithium selon l'invention pour améliorer la durée de vie de batterie Li-ion et/ou les performances électroniques d'une batterie Li-ion et/ou la sécurité de ladite batterie, en particulier à une tension de coupure de charge élevée telle que par exemple à 4,4V.

De préférence, l'invention concerne l'utilisation du sel de bis(fluorosulfonyl)imide de lithium selon l'invention pour diminuer le courant résiduel lors de l'application d'une tension de coupure de charge, par exemple de 4,2 volt ou 4,4 volt.

Le sel de bis(fluorosulfonyl)imide de lithium selon l'invention, ayant une teneur spécifique en ions H$^+$ ou un pH spécifique en solution aqueuse, peut être obtenu par mise en œuvre d'une étape d'ajustement du pH d'un sel de bis(fluorosulfonyl)imide de lithium dans l'eau préparé initialement par tout procédé connu de l'état de la technique.

La présente invention concerne également un procédé de préparation d'un sel de bis(fluorosulfonyl)imide de lithium susmentionné, comprenant :

- i) une étape de préparation d'un sel de bis(fluorosulfonyl)imide de lithium ; et
- ii) une étape d'ajustement du pH,

pour obtenir un sel de bis(fluorosulfonyl)imide de lithium formant, après mise en solution dans l'eau, une solution aqueuse ayant un pH compris entre 4 et 8, en particulier à une température de 25°C.

La présente invention concerne également un procédé de préparation d'un sel de bis(fluorosulfonyl)imide de lithium susmentionné, comprenant :

- i) une étape de préparation d'un sel de bis(fluorosulfonyl)imide de lithium ; et
- ii) une étape d'ajustement du pH,

pour obtenir un sel de bis(fluorosulfonyl)imide de lithium, comprenant une teneur en ions $H^+$ comprise entre 0,08 ppb et 0,80 ppm.

L'étape d'ajustement du pH peut consister en un ou plusieurs lavages avec de l'eau, notamment de l'eau désionisée, ou en l'ajout de solution aqueuse basique.

Le procédé de préparation peut comprendre des étapes ultérieures d'extraction du sel de bis(fluorosulfonyl)imide de lithium obtenu à l'issue de l'étape ii) en phase organique (par exemple par ajout de solvant organique tel que l'acétate de butyle), de concentration par exemple à une température inférieure à 60°C, de cristallisation ...

Tous les modes de réalisation décrits ci-dessus peuvent être combinés les uns avec les autres.

Les exemples suivants permettent d'illustrer l'invention, sans toutefois la limiter.

EXEMPLES

Des tests de chronoampérométrie ont été réalisés. Pour cela des piles boutons CR2032 ont été fabriquées munies d'une feuille d'aluminium de diamètre 20 mm comme électrode de travail, d'une pastille de lithium métal de diamètre 8 mm comme électrode de référence et d'un séparateur en fibre de verre de diamètre 18 mm imbibé avec 12 gouttes (0.6 mL) d'une solution de LiFSI à 1 mol/L dans un mélange de solvant composé de carbonate d'éthylène et de carbonate d'éthyle méthyle (CAS = 623-53-0) dans un rapport 3/7 en volume. Ensuite un voltage a été appliqué aux bornes de la pile bouton et le courant généré a été mesuré et enregistré.

**Exemple 1** : Etude de Chronoampérométrie à une tension de coupure de charge de 4,2 volts

Des mesures de chronoampérométrie ont été réalisées dans un système avec une électrode d'aluminium en électrode de travail et du lithium métal comme électrode de référence.

*Mesure du pH* : Le pH des solutions de LiFSI est mesuré à l'aide d'un pH-mètre (modèle pHM210 de la marque Radiometer) préalablement étalonné à l'aide de trois solutions tampons (pH=4,0, 7,0 et 10,0). Le sel de LiFSI a été mis en solution dans une quantité d'eau (ayant un pH de 7,45 $\pm$ 0,5), pour obtenir une concentration massique en LiFSI de 0,125 g/mL. La solution aqueuse est agitée pendant la mesure du pH.

Le sel LiFSI de la solution N°3 a été obtenu selon le procédé décrit dans Abouimrane et al. « Liquid Electrolyte based on lithium bis-fluorosulfonyl imide salt: Al corrosion studies and lithium ion battery investigation », Journal of Power Sources 189 (2009), p. 693-696 (paragraphe 3. Résultats). Les sels LiFSI des solutions N°1 et N°2 ont été obtenus à partir de sel de LiFSI préparé selon le procédé décrit dans l'article de Abouimrane et al. susmentionné, suivi d'une étape d'ajustement du pH. Les solutions 1 à 3 suivantes ont été préparées, et leur pH a été mesuré selon la méthode mentionnée ci-dessus :

| Solution de LiFSI | N°1 | N°2 | N°3 |
|---|---|---|---|
| pH (à 25°C) | 7,29 | 6,79 | 2,27 |

*Préparation des électrolytes :*

Pour la réalisation des tests de chronoampérométrie, trois électrolytes ont été préparés par mise en solution d'un sel LiFSI (N°1 à N°3) dans un mélange de solvant composé de carbonate d'éthylène et de carbonate d'éthyle méthyle (CAS = 623-53-0) dans un rapport 3/7 en volume, pour obtenir des solutions ayant une teneur de 1 mol/L en LiFSI :

| Electrolyte | N°1E (invention) | N°2E (invention) | N°3E (comparatif) |
|---|---|---|---|
| Solution de LiFSI | N°1 | N°2 | N°3 |
| pH (à 25°C) | 7,29 | 6,79 | 2,27 |

*Chronoampérométrie :*

Le test de chronoampérométrie a été réalisé à 25°C, par l'application d'une tension de coupure de charge constante (4,2 volt) et le courant obtenu a été observé. Au bout de 5h, la valeur du courant résiduel a été mesurée et retranscrite dans le tableau suivant. Ce courant résiduel est l'indicateur des réactions secondaires qui peuvent se produire lors du fonctionnement d'une batterie Li-ion.

| pH | 2,27 | 7,29 |
|---|---|---|
| I à 4.2V (t =5H) | 31 | 14.4 |

Les résultats montrent que l'électrolyte N°3E (LiFSI : pH = 2,27) conduit à un courant résiduel deux fois plus élevé que l'électrolyte N° 1E (LiFSI : pH = 7,29), après 5h de fonctionnement (soit après la formation des couches de passivation sur l'électrode d'aluminium). Or ce courant est directement relié à la durée de vie de la batterie Li-ion. En effet, chaque électron consommé dans une réaction parasite ne participe plus à la capacité ou autonomie de la batterie.
Ainsi, l'utilisation d'un sel de LiFSI selon l'invention (ayant un pH de 7,29 après mise en solution dans l'eau), conduit à un courant résiduel plus faible, et de ce fait à une meilleure durée de vie de la batterie Li-ion, qu'avec un sel LiFSI ayant un pH de 2,27 après mise en solution dans l'eau.

**Exemple 2** : Etude de Chronoampérométrie à 4,4 volts

Une expérience similaire à celle de l'exemple 1 a été réalisée mais à une tension de coupure de charge de 4,4 V.
Au bout de 5h, la valeur du courant résiduel a été mesurée et retranscrite dans le tableau suivant.

| pH | 2.27 | 6.79 | 7.29 |
|---|---|---|---|
| I à 4.4V (t =5H) | 401 | 203 | 130 |

Les résultats démontrent que l'électrolyte N°3E (LiFSI : pH = 2.27) conduit à un courant résiduel 3 fois plus élevé que l'électrolyte N°1 E (LiFSI : pH = 7,29), après 5h de fonctionnement (soit après la formation des couches de passivation sur l'électrode d'aluminium).
Ainsi, l'utilisation d'un sel de LiFSI selon l'invention (ayant un pH de 7,29 après mise en solution dans l'eau), conduit à un courant résiduel plus faible, et de ce fait à une meilleure durée de vie de la batterie Li-ion, qu'avec un sel LiFSI ayant un pH de 2.27.
Des résultats similaires sont obtenus avec un de LiFSI ayant un pH de 6,79 après mise en solution dans l'eau par rapport à celui avec un pH de 2.27.

Modes de réalisations

1. Sel de bis(fluorosulfonyl)imide de lithium, caractérisé en ce que, après mise en solution dans l'eau pour former une solution aqueuse, ladite solution aqueuse possède un pH compris entre 4 et 8, en particulier à une température de 25°C.

2. Sel de bis(fluorosulfonyl)imide de lithium selon le mode de réalisation 1, caractérisé en ce que, après mise en solution dans l'eau pour former une solution aqueuse, ladite solution aqueuse possède un pH compris entre 4,1 et 8, entre 4,2 et 8, entre 4,3 et 8, entre 4,4 et 8, entre 4,5 et 8, entre 4,6 et 8, entre 4,7 et 8, entre 4,8 et 8, entre 4,9 et 8, entre 5 et 8, entre 5,1 et 8, entre 5,2 et 8, entre 5,3 et 8, entre 5,4 et 8, entre 5,5 et 8, entre 5,6 et 8, entre 5,7 et 8, entre 5,8 et 8, entre 5,9 et 8, entre 6 et 8, entre 6,1 et 8, entre 6,2 et 8, entre 6,3 et 8, entre 6,4 et 8, entre 6,5 et 8, entre 6,6 et 8, entre 6,7 et 8, entre 6,8 et 8, entre 6,9 et 8, entre 7 et 8, entre 4 et 7,5, entre 4,1 et 7,5, entre 4,2 et 7,5, entre 4,3 et 7,5, entre 4,4 et 7,5, entre 4,5 et 7,5, entre 4,6 et 7,5, entre 4,7 et 7,5, entre 4,8 et 7,5, entre 4,9 et 7,5, entre 5 et 7,5, entre 5,1 et 7,5, entre 5,2 et 7,5, entre 5,3 et 7,5, entre 5,4 et 7,5, entre 5,5 et 7,5, entre 5,6 et 7,5, entre 5,7 et 7,5, entre 5,8 et 7,5, entre 5,9 et 7,5, entre 6 et 7,5, entre 6,1 et 7,5, entre 6,2 et 7,5, entre 6,3 et 7,5, entre 6,4 et 7,5, ou entre 6,5 et 7,5.

3. Sel de bis(fluorosulfonyl)imide de lithium selon l'un quelconque des modes de réalisations 1 ou 2, caractérisé en ce que la concentration dudit sel dans la solution aqueuse est comprise entre 0,050 et 0,250 g/mL, de préférence entre 0,080 et 0,200 g/mL, préférentiellement entre 0,1 et 0,2, en particulier la concentration est de 0,125 g/mL.

4. Sel de bis(fluorosulfonyl)imide de lithium selon l'un quelconque des modes de réalisations 1 à 3, caractérisé en ce que qu'il comprend une teneur en ions $H^+$ comprise entre 0,08 ppb et 0,80 ppm, entre 0,08 ppb et 0,63 ppm, entre 0,08 ppb et 0,50 ppm, entre 0,08 ppb et 0,40 ppm, entre 0,08 ppb et 0,32 ppm, entre 0,08 ppb et 0,25 ppm, entre 0,08 ppb et 0,20 ppm, entre 0,08 ppb et 0,16 ppm, entre 0,08 ppb et 0,13 ppm, entre 0,08 ppb et 0,10 ppm, entre 0,08 ppb et 0,08 ppm, entre 0,08 ppb et 0,06 ppm, entre 0,08 ppb et 0,05 ppm, entre 0,08 ppb et 0,04 ppm, entre 0,08 ppb et 0,032 ppm, entre 0,08 ppb et 0,025 ppm, entre 0,08 ppb et 0,020 ppm, entre 0,08 ppb et 0,016 ppm, entre 0,08 ppb et 0,013 ppm, entre 0,08 ppb et 10 ppb, entre 0,08 ppb et 8 ppb, entre 0,08 ppb et 6,35 ppb, entre 0,08 ppb et 5,05 ppb, entre 0,08 ppb et 4 ppb, entre 0,08 ppb et 3,18 ppb, entre 0,08 ppb et 2,53 ppb, entre 0,08 ppb et 2,01 ppb, entre 0,08 ppb et 1,59 ppb, entre 0,08 ppb et 1,27 ppb, entre 0,08 ppb et 1,01 ppb, entre 0,25 ppb et 0,8 ppm, entre 0,25 ppb et 0,63 ppm, entre 0,25 ppb et 0,50 ppm, entre 0,25 ppb et 0,40 ppm, entre 0,25 ppb et 0,32 ppm, entre 0,25 ppb et 0,25 ppm, entre 0,25 ppb et 0,20 ppm, entre 0,25 ppb et 0,16 ppm, entre 0,25 ppb et 0,13 ppm, entre 0,25 ppb et 0,10 ppm, entre 0,25 ppb et 0,08 ppm, entre 0,25 ppb et 0,06 ppm, entre 0,25 ppb et 0,05 ppm, entre 0,25 ppb et 0,04 ppm, entre 0,25 ppb et 0,032 ppm, entre 0,25 ppb et 0,025 ppm, entre 0,25 ppb et 0,020 ppm, entre 0,25 ppb et 0,016 ppm, entre 0,25 ppb et 0,013 ppm, entre 0,25 ppb et 10 ppb, entre 0,25 ppb et 8 ppb, entre 0,25 ppb et 6,35 ppb, entre 0,25 ppb et 5,05 ppb, entre 0,25 ppb et 4 ppb, entre 0,25 ppb et 3,18 ppb, ou entre 0,25 ppb et 2,53 ppb.

5. Utilisation d'un sel de bis(fluorosulfonyl)imide de lithium selon l'un quelconque des modes de réalisations 1 à 4, dans une batterie Li-ion, en particulier dans des batteries Li-ion d'appareils nomades, par exemple les téléphones portables ou les ordinateurs portables, de véhicules électriques, de stockage d'énergie renouvelable par exemple le photovoltaïque ou l'éolien.

6. Utilisation selon le mode de réalisation 5, dans une batterie Li-ion fonctionnant à une tension de coupure de charge supérieure ou égale à 4,2V, de préférence supérieure ou égale à 4,4V.

7. Composition d'électrolyte comprenant un sel de bis(fluorosulfonyl)imide de lithium selon l'un quelconque des modes de réalisations 1 à 4 et un solvant organique.

8. Utilisation d'un sel de bis(fluorosulfonyl)imide de lithium selon l'un quelconque des modes de réalisations 1 à 4, pour améliorer la durée de vie de batterie Li-ion et/ou les performances électroniques d'une batterie Li-ion, en particulier à une tension de coupure de charge supérieure ou égale à 4,4V.

## Revendications

1. Solution aqueuse de sel de bis(fluorosulfonyl)imide de lithium, **caractérisé en ce que** la concentration dudit sel dans la solution aqueuse est comprise entre 0,050 et 0,250 g/mL, ladite solution aqueuse possède un pH compris entre 4 et 8, en particulier à une température de 25°C.

2. Solution aqueuse de sel de bis(fluorosulfonyl)imide de lithium selon la revendication 1, **caractérisé en ce que**, ladite solution aqueuse possède un pH compris entre 4,1 et 8, entre 4,2 et 8, entre 4,3 et 8, entre 4,4 et 8, entre 4,5 et 8, entre 4,6 et 8, entre 4,7 et 8, entre 4,8 et 8, entre 4,9 et 8, entre 5 et 8, entre 5,1 et 8, entre 5,2 et 8, entre 5,3 et 8, entre 5,4 et 8, entre 5,5 et 8, entre 5,6 et 8, entre 5,7 et 8, entre 5,8 et 8, entre 5,9 et 8, entre 6 et 8, entre 6,1 et 8, entre 6,2 et 8, entre 6,3 et 8, entre 6,4 et 8, entre 6,5 et 8, entre 6,6 et 8, entre 6,7 et 8, entre 6,8 et 8, entre 6,9 et 8, entre 7 et 8, entre 4 et 7,5, entre 4,1 et 7,5, entre 4,2 et 7,5, entre 4,3 et 7,5, entre 4,4 et 7,5, entre 4,5 et 7,5, entre 4,6 et 7,5, entre 4,7 et 7,5, entre 4,8 et 7,5, entre 4,9 et 7,5, entre 5 et 7,5, entre 5,1 et 7,5, entre 5,2 et 7,5, entre 5,3 et 7,5, entre 5,4 et 7,5, entre 5,5 et 7,5, entre 5,6 et 7,5, entre 5,7 et 7,5, entre 5,8 et 7,5, entre 5,9 et 7,5, entre 6 et 7,5, entre 6,1 et 7,5, entre 6,2 et 7,5, entre 6,3 et 7,5, entre 6,4 et 7,5, ou entre 6,5 et 7,5.

3. Solution aqueuse de sel de bis(fluorosulfonyl)imide de lithium selon l'une quelconque des revendications 1 ou 2, **caractérisé en ce que** la concentration dudit sel dans la solution aqueuse est comprise, entre 0,080 et 0,200 g/mL, préférentiellement entre 0,1 et 0,2, en particulier la concentration est de 0,125 g/mL.

4. Solution aqueuse de sel de bis(fluorosulfonyl)imide de lithium selon l'une quelconque des revendications 1 à 3, **caractérisé en ce que** qu'elle comprend une teneur en ions $H^+$ comprise entre 0,08 ppb et 0,80 ppm, entre 0,08 ppb et 0,63 ppm, entre 0,08 ppb et 0,50 ppm, entre 0,08 ppb et 0,40 ppm, entre 0,08 ppb et 0,32 ppm, entre 0,08 ppb et 0,25 ppm, entre 0,08 ppb et 0,20 ppm, entre 0,08 ppb et 0,16 ppm, entre 0,08 ppb et 0,13 ppm, entre 0,08 ppb et 0,10 ppm, entre 0,08 ppb et 0,08 ppm, entre 0,08 ppb et 0,06 ppm, entre 0,08 ppb et 0,05 ppm, entre 0,08 ppb et 0,04 ppm, entre 0,08 ppb et 0,032 ppm, entre 0,08 ppb et 0,025 ppm, entre 0,08 ppb et 0,020 ppm, entre 0,08 ppb et 0,016 ppm, entre 0,08 ppb et 0,013 ppm, entre 0,08 ppb et 10 ppb, entre 0,08 ppb et 8 ppb, entre 0,08 ppb et 6,35 ppb, entre 0,08 ppb et 5,05 ppb, entre 0,08 ppb et 4 ppb, entre 0,08 ppb et 3,18 ppb, entre 0,08 ppb et 2,53 ppb, entre 0,08 ppb et 2,01 ppb, entre 0,08 ppb et 1,59 ppb, entre 0,08 ppb et 1,27 ppb, entre 0,08 ppb et 1,01 ppb, entre 0,25 ppb et 0,8 ppm, entre 0,25 ppb et 0,63 ppm, entre 0,25 ppb et 0,50 ppm, entre 0,25 ppb et 0,40 ppm, entre 0,25 ppb et 0,32 ppm, entre 0,25 ppb et 0,25 ppm, entre 0,25 ppb et 0,20 ppm, entre 0,25 ppb et 0,16 ppm, entre 0,25 ppb et 0,13 ppm, entre 0,25 ppb et 0,10 ppm, entre 0,25 ppb et 0,08 ppm, entre 0,25 ppb et 0,06 ppm, entre 0,25 ppb et 0,05 ppm, entre 0,25 ppb et 0,04 ppm, entre 0,25 ppb et 0,032 ppm, entre 0,25 ppb et 0,025 ppm, entre 0,25 ppb et 0,020 ppm, entre 0,25 ppb et 0,016 ppm, entre 0,25 ppb et 0,013 ppm, entre 0,25 ppb et 10 ppb, entre 0,25 ppb et 8 ppb, entre 0,25 ppb et 6,35 ppb, entre 0,25 ppb et 5,05 ppb, entre 0,25 ppb et 4 ppb, entre 0,25 ppb et 3,18 ppb, ou entre 0,25 ppb et 2,53 ppb.

Europäisches
Patentamt

European
Patent Office

Office européen
des brevets

# RAPPORT DE RECHERCHE EUROPEENNE

Numéro de la demande

EP 21 15 0753

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 415 709 A1 (MITSUBISHI MATERIALS CORP [JP]; MITSUBISHI MAT ELECT CHEM CO [JP]) 8 février 2012 (2012-02-08) * Paragraphes 70-72, 75 * ----- | 1-4 | INV. H01M10/0525 H01M10/0567 H01M10/0568 |
| X | WO 2014/035464 A1 (BOULDER IONICS CORP [US]; SINGH P RAJENDRA [US] ET AL.) 6 mars 2014 (2014-03-06) * paragraphe 58 * ----- | 1-4 | |
| T | REBER DAVID ET AL: "Stability of aqueous electrolytes based on LiFSI and NaFSI", ELECTROCHIMICA ACTA, ELSEVIER, AMSTERDAM, NL, vol. 321, 6 août 2019 (2019-08-06), XP085788248, ISSN: 0013-4686, DOI: 10.1016/J.ELECTACTA.2019.134644 [extrait le 2019-08-06] * page 2, par. 2.1; page 4, figure 4 * ----- | | |
| A | ABOUIMRANE A ET AL: "Liquid electrolyte based on lithium bis-fluorosulfonyl imide salt: Aluminum corrosion studies and lithium ion battery investigations", JOURNAL OF POWER SOURCES, ELSEVIER SA, CH, vol. 189, no. 1, 1 avril 2009 (2009-04-01), pages 693-696, XP025982779, ISSN: 0378-7753, DOI: 10.1016/J.JPOWSOUR.2008.08.077 [extrait le 2008-09-03] * Abrégé, page 694, paragraphes 1-3; Page 696, lignes 8-9. * ----- | 1-4 | DOMAINES TECHNIQUES RECHERCHES (IPC) H01M |

Le présent rapport a été établi pour toutes les revendications

| Lieu de la recherche | Date d'achèvement de la recherche | Examinateur |
|---|---|---|
| Munich | 13 avril 2021 | Bettio, Andrea |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 15 0753

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-04-2021

| Document brevet cité au rapport de recherche | Date de publication | Membre(s) de la famille de brevet(s) | | Date de publication |
|---|---|---|---|---|
| EP 2415709 A1 | 08-02-2012 | CN | 102341343 A | 01-02-2012 |
| | | EP | 2415709 A1 | 08-02-2012 |
| | | EP | 2835348 A2 | 11-02-2015 |
| | | JP | 5443118 B2 | 19-03-2014 |
| | | JP | 2010254543 A | 11-11-2010 |
| | | KR | 20110131241 A | 06-12-2011 |
| | | US | 2012014859 A1 | 19-01-2012 |
| | | US | 2014037529 A1 | 06-02-2014 |
| | | WO | 2010113483 A1 | 07-10-2010 |
| WO 2014035464 A1 | 06-03-2014 | AU | 2013309495 A1 | 12-03-2015 |
| | | CA | 2884109 A1 | 06-03-2014 |
| | | CN | 104718157 A | 17-06-2015 |
| | | EP | 2890632 A1 | 08-07-2015 |
| | | JP | 6298956 B2 | 28-03-2018 |
| | | JP | 2015531744 A | 05-11-2015 |
| | | KR | 20150048840 A | 07-05-2015 |
| | | US | 8377406 B1 | 19-02-2013 |
| | | WO | 2014035464 A1 | 06-03-2014 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ABOUIMRANE et al.** Liquid Electrolyte based on lithium bis-fluorosulfonyl imide salt: Al corrosion studies and lithium ion battery investigation. *Journal of Power Sources,* 2009, vol. 189, 693-696